# EUROPÄISCHE PATENTSCHRIFT

(11) **EP 3 243 599 B1**
(45) Veröffentlichungstag und Bekanntmachung des Hinweises auf die Patenterteilung: **11.11.2020**
(21) Anmeldenummer: 17171114.6
(22) Anmeldetag: 15.05.2017
(51) Int. Cl.: B23Q 1/00

(54) **SPANNEINHEIT MIT SPANNMODUL**
TENSIONING UNIT WITH TENSIONING MODULE
UNITÉ DE SERRAGE ET MODULE DE SERRAGE

(30) Priorität: 13.05.2016 DE 102016108895
(43) Veröffentlichungstag der Anmeldung: 15.11.2017
(73) Patentinhaber: Schunk GmbH & Co. KG Spann- und Greiftechnik, 74348 Lauffen am Neckar (DE)
(72) Erfinder: SCHRÄDER, Philipp, 88512 Mengen (DE); WÄSCHER, Tobias, 88374 Hoßkirch (DE)
(74) Vertreter: DREISS Patentanwälte PartG mbB

(56) Entgegenhaltungen:
- EP-A1- 2 759 370
- DE-A1- 19 861 091
- DE-A1-102004 055 355
- DE-A1-102010 037 545
- DE-A1-102010 037 547

## Beschreibung

Die Erfindung betrifft eine Spanneinheit mit einem Spannmodul, insbesondere ein Spannmodul eines Nullpunktspannsystems. Bekannte Spannmodule weisen eine Spannaufnahme mit wenigstens einem Spannmittel auf, wobei ein Spannelement, wie beispielsweise ein Spannbolzen oder ein Spannring, gegen oder in die Spannaufnahme gezogen wird und das Spannmittel in radialer Richtung in eine Spannlage verlagert werden kann. In dieser Spannlage wirkt das Spannmittel mit dem Spannelement so zusammen, dass das Spannelement dann in axialer Richtung in oder gegen die Spannaufnahme gezogen wird. Derartige Spannmodule sind beispielsweise aus der DE 10 2010 007 924 A1 oder DE 10 2013 222 952 A1 bekannt.

Die am oder im Spannmodul verriegelbaren Spannelemente sind beispielsweise an einem zu bearbeitenden Werkstück oder einem Werkstückträger vorgesehen, und werden zum positionsgenauen Spannen und anschließendem Bearbeiten an den Spannmodulen verriegelt. Bei Nullpunktspannsystemen handelt es sich um Spannsysteme, mit denen zu bearbeitende Werkstücke oder Werkstückträger wiederholbar positionsgenau gespannt werden können. Dabei ist denkbar, mehrere Spannmodule auf einem gemeinsamen Träger, beispielsweise auf einem Spanntisch oder einer Spannplatte vorzusehen, um insbesondere auch größere Werkstücke mittels mehreren Spannelementen zu spannen.

Spannelemente, die hierbei Verwendung finden können, sind beispielsweise aus der DE 10 2010 007 924 A1 oder der DE 10 2010 013 912 A1 bekannt. Solche Spannelemente können insbesondere konusflächige Angriffsabschnitte aufweisen, gegen welche die Spannmittel der Spannmodule wirken.

Beim Spannen eines Werkstücks oder eines Werkstückträgers mit mehreren, insbesondere drei oder vier Spannmodulen entsteht regelmäßig auf Grund von Fertigungstoleranzen, von thermischen Ausdehnungen des Werkstücks oder des Werkstückträgers und/oder von frei werdenden Eigenspannungen eine mechanische Überbestimmung, was zu weiteren mechanischen Spannungen im Werkstück, im Werkstückträger und/oder im gesamten Spannsystem führen kann. Dabei ist bei der Bearbeitung von größeren Werkstücken oder der Anordnung von größeren Werkstücken an größeren Werkstückträgern gerade eine thermische Ausdehnung problematisch. Eine Erwärmung des Werkstücks kann insbesondere auf Grund einer entsprechenden Bearbeitung erfolgen. Die thermische Ausdehnung kann dabei im 1/10 bis 1/1 Millimeterbereich liegen. Das kann zur Folge haben, dass insbesondere unter Verwendung von mehr als einem Spannmodul die zugehörigen Spannelemente dann nicht zentrisch in die Spannmodule einführbar sind. Neben einem Höhenversatz kann ein Radialversatz auftreten, der zu einer mechanischen Überbestimmung führt, woraus mechanische Spannungen im Werkstückträger, im Werkstück, oder zwischen den Spannmodulen entstehen können.

Aus der DE 20 2009 006 429 U1 ist es beispielsweise in diesem Zusammenhang bekannt, eine Höhenanpassung mittels entsprechend hohen Ausgleichsadaptern zu ermöglichen. Die EP 2 353 774 B1 schlägt vor, einen Höhenausgleich an der Spannvorrichtung vorzusehen.

Aus der DE 10 2013 201 310 A1 sind Spannelemente bekannt, die zwar eine Spannfunktion, aber keine Niederzugfunktion aufweisen.

Aus der DE 10 2010 037547 A1 ist eine Spanneinheit mit einem Spannmodul mit den Merkmalen des Oberbegriffs des Patentanspruchs 1 bekannt. Weitere Spanneinheiten mit Spannmodulen sind aus der DE 10 2010 037545 A1, der DE 198 61 091 A1 und der DE 10 2004 055355 A1 bekannt.

Der vorliegenden Erfindung liegt die Aufgabe zu Grunde, Spanneinheiten bereitzustellen, die Spannmodule aufweisen, sowie ein zugehöriges Spannsystem bereitzustellen, mit denen, beziehungsweise bei dem mehrere Spannelemente in zugehörigen Spannaufnahmen gespannt werden können, wobei eine mechanische Überbestimmung reduziert oder vermieden werden soll. Die Spanneinheiten sollen dabei vergleichsweise einfach aufgebaut sein und wenig Bauraum beanspruchen.

Diese Aufgabe wird durch eine Spanneinheit mit den Merkmalen des Anspruchs 1 gelöst.

Die erfindungsgemäße Spanneinheit umfasst folglich ein Grundteil und ein Einsatzteil wobei das Spannmodul in oder an dem Einsatzteil angeordnet ist oder als solches ausgebildet ist. Das Einsatzteil ist dabei am Grundteil so angeordnet, dass es gegenüber dem Grundteil derart in wenigstens eine radiale Richtung beweglich angeordnet ist, dass beim Verlagern des Spannmittels in die Spannlage ein Radialausgleich des Einsatzteils gegenüber dem Grundteil in eine Endlage ermöglicht ist. Dadurch wird erreicht, dass beim Verriegeln des Spannelements in oder an der Spannaufnahme, was durch Verlagern des Spannmittels in die Spannlage passiert, ein Ausgleich des Einsatzteils gegenüber dem Grundteil in radiale Richtung ermöglicht wird. Auf Grund der radialen Beweglichkeit des Einsatzteils gegenüber dem Grundteil kann folglich das Einsatzteil in eine radiale Richtung seitlich verlagert werden. Damit können auftretende Ausdehnungen am Werkstück oder an einem Werkstückträger sowie an einem Spanntisch, an dem mehrere Spanneinheiten vorgesehen sein können, zumindest während des Verriegelns des Spannelements in oder an der Spannaufnahme ausgeglichen werden.

Gemäß der Erfindung sind zudem Verriegelungsmittel vorgesehen, die aus einer Entriegelungslage, in der das Einsatzteil in die Endlage bewegt werden kann, in eine Verriegelungslage, in der das Einsatzteil gegen das Grundteil verriegelt ist, verlagerbar sind. Durch die Verriegelungsmittel kann folglich das Einsatzteil am Grundteil festgesetzt werden, nachdem die Spannmittel das Spannelement in oder an der Spannaufnahme gespannt haben. Hierdurch wird letztendlich eine sichere Spannung des Spannelements, beziehungsweise eines am Spannelement vorgesehenen Werkstücks oder Trägers ermöglicht. Die Verriegelungsmittel können dabei im oder am Grundteil, oder auch im oder am Einsatzteil vorgesehen sein.

Insgesamt kann durch eine derartige, erfindungsgemäße Spanneinheit zum einen ein radialer Ausgleich in wenigstens eine radiale Richtung bereitgestellt werden, zum anderen kann durch das Verriegeln des Einsatzteils gegenüber dem Grundteil ein sicheres Spannen eines Werkstücks beziehungsweise eines Werkstückträgers gewährleistet werden.

Beim Spannen von größeren Bauteilen oder größeren Werkstückträgern, ist es vorteilhaft, mehrere und unterschiedliche Spanneinheiten vorzusehen. Beim Einsatz von mehreren Spanneinheiten kann es vorgesehen sein, dass das Einsatzteil bezüglich dem Grundteil lediglich in einer radialen Richtung verlagerbar ist. Eine solche Spanneinheit wird nachfolgend als ausgleichende Spanneinheit bezeichnet. Die eine radiale Richtung, in welcher das Einsatzteil zum Grundteil exzentrisch verlagerbar ist, kann dabei genau die Richtung sein, welche von der ausgleichenden Spanneinheit hin zu einer starren Spanneinheit, welche keinen radialen Ausgleich zulässt und welche letztlich den Referenzpunkt des zu spannenden Werkstücks vorgibt, verläuft.

Dabei kann das Grundteil beziehungsweise das Einsatzteil in Richtung der einen radialen Richtung verlaufende Flächenabschnitte aufweisen, wobei dann das Einsatzteil beziehungsweise das Grundteil mit diesen Flächenabschnitten korrespondierende Gegenabschnitte aufweist. Die Flächenabschnitte und Gegenabschnitte sind so vorgesehen, dass das Einsatzteil lediglich in der einen radialen Richtung gegenüber dem Grundteil beweglich angeordnet ist. Die Flächenabschnitte beziehungsweise Gegenabschnitte können dabei insbesondere in Form von Nuten ausgebildet sein, in welche Nutensteine eingreifen. Die Nuten sind dann entweder am Grundteil beziehungsweise Einsatzteil vorgesehen und die Nutensteine sind dann entweder am Einsatzteil beziehungsweise Grundteil vorgesehen. Das Einsatzteil kann folglich dann nur in eine Richtung exzentrisch zum Grundteil, beziehungsweise zu dessen Mittellängsachse, verlagert werden.

Zum anderen können die erfindungsgemäßen Spanneinheiten auch als schwimmende Spanneinheiten ausgebildet sein. Diese Spanneinheiten zeichnen sich dadurch aus, dass das Einsatzteil und das Grundteil derart ausgebildet sind, dass das Einsatzteil in sämtliche radiale Richtungen um das Grundteil beziehungsweise gegenüber diesem beweglich angeordnet ist. Das Einsatzteil ist folglich in jede radiale Richtung exzentrisch zum Grundteil, beziehungsweise der Mittellängsachse, verlagerbar.

Bei einer solchen Spanneinheit ist dann vorteilhafterweise das Einsatzelement in einer neutralen Nichtspannlage in sämtlichen radialen Richtungen um einen Ausgleichsabstand zum Grundteil hin beabstandet, so dass das Einsatzteil dann um diesen Ausgleichsabstand beim Verriegeln des Spannelements in der Spannaufnahme in radialer Richtung verlagerbar ist. Der Ausgleichsabstand kann dabei im Bereich zwischen 0,5 und 3 mm, insbesondere im Bereich von 1 bis 6 mm liegen. Dadurch kann gewährleistet werden, dass das Einsatzteil in radialer Richtung gegenüber dem Grundteil ausreichend verlagert werden kann.

Um zu erreichen, dass das Einsatzteil in einer Nichtspannlage eine zum Grundteil konzentrische Lage einnimmt, ist denkbar, dass zwischen dem Einsatzteil und dem Grundteil elastisch nachgiebige Ausgleichsmittel vorgesehen sind. Als Ausgleichsmittel kommen insbesondere gummielastische Elemente, Federelemente, oder sonstige Elemente in Betracht, die das Einsatzteil in eine konzentrische Lage drängen.

Vorteilhaft ist, wenn die Verriegelungsmittel Anlageabschnitte aufweisen, die in der Verriegelungslage das Einsatzteil in axialer Richtung gegen das Grundteil beaufschlagen. Die Beaufschlagung ist vorteilhafterweise derart, dass das Einsatzteil am Grundteil sicher festgesetzt und damit verriegelt wird. Die axiale Beaufschlag hat den Vorteil, dass beim Beaufschlagen keine Bewegung des Einsatzteils in eine radiale Richtung erfolgt, und dadurch das Einsatzteil nicht ungewollt beim Verriegeln in eine radiale Richtung ausgelenkt wird.

Dabei ist denkbar, dass die Verriegelungsmittel und das Grundteil einer sich in axialer Richtung erstreckende Ausnehmung begrenzen, wobei die Ausnehmung in radialer Richtung hin offen ist. Das Einsatzteil weist dann einen in die Ausnehmung eingreifenden Klemmabschnitt derart auf, dass in der Verriegelungslage die Anlageabschnitte den Klemmabschnitt gegen das Grundteil beaufschlagen. Auf diese Art und Weise kann ein einfaches und dennoch sicheres Verriegeln des Klemmabschnitts, also des Einsatzteils, am Grundteil erreicht werden.

Dabei ist denkbar, dass Federelemente vorgesehen sind, die die Verriegelungsmittel in der Verriegelungslage gegen das Einsatzteil, und insbesondere gegen den Klemmabschnitt des Einsatzteils drängen, und damit das Einsatzteil verriegeln. Durch Vorsehen der Federelemente wird folglich eine sichere Verriegelung des Einsatzteils am Grundteil erreicht.

Ferner ist denkbar, dass die Verriegelungsmittel wenigstens einen Druckraum begrenzen, der bei Druckbeaufschlagung die Verriegelungsmittel gegen das Einsatzteil beaufschlagen. Folglich wird durch Druckbeaufschlagung ein Verriegeln des Einsatzteils am Grundteil erreicht.
Ferner ist denkbar, insbesondere dann, wenn Federelemente vorgesehen sind, die die Verriegelungsmittel gegen das Einsatzteil drängen, dass ein Druckraum vorgesehen ist, der bei Druckbeaufschlagung entgegen der Federkraft der Federelemente die Verriegelungsmittel in die Entriegelungslage drängt. Eine derartige Ausbildung hat den Vorteil, dass ein Entriegeln durch Druckbeaufschlagung erfolgt, und dass ein sicheres Verriegeln auf Grund der Federelemente, auch ohne Anliegen eines Drucks im Druckraum, erreicht werden kann.

Die Verriegelungsmittel können vorzugsweise einen das Einsatzteil in radialer Richtung umgebenden Verriegelungsring umfassen. Die Anlageabschnitte können dann am Ring vollständig umlaufend oder durch mehrere am Ring vorgesehene und zueinander beabstandete Anlageabschnitte ausgebildet sein.

Ferner ist denkbar, dass die Verriegelungsmittel eine verlagerbare Schraube und/oder Mutter umfassen, die in der Verriegelungslage das Einsatzteil gegen das Grundteil beaufschlagt. Durch entsprechendes Verdrehen der Schraube oder Mutter kann folglich das Einsatzteil verriegelt werden. Ein solches Verdrehen der Schraube oder Mutter kann maschinell oder auch manuell erfolgen.

In diesem Zusammenhang ist vorteilhaft, wenn das Einsatzteil eine sich in axialer Richtung erstreckende Ausnehmung begrenzt und wenn die Verriegelungslage in der Ausnehmung in axialer Richtung verlagerbar sind. Die Verlagerung der Verriegelungsmittel kann dann insbesondere so erfolgen, dass in der Verriegelungslage die Verriegelungsmittel das Einsatzteil gegen das Grundteil beaufschlagen. Insbesondere ist denbkar, dass die Verriegelungsmittel, wie bereits erwähnt, als Schraube ausgebildet sind, die in der Ausnehmung angeordnet ist und bei Verdrehen das Einsatzteil gegen das Grundteil beaufschlagt.

Insbesondere dann, wenn das Einsatzteil im Grundteil angeordnet wird und von diesem in radialer Richtung vollständig umschlossen wird, kann es vorteilhaft sein, dass das Grundteil Spannanschlüsse und sich daran anschließende Spannkanäle zur Versorgung des wenigstens einen Spannmittels und/oder Verriegelungsanschlüsse und sich daran anschließende Verriegelungskanäle zur Versorgung der Verriegelungsmittel aufweist. Die Kanäle sind dann derart ausgebildet, dass eine radiale Verlagerung des Einsatzteils zwar möglich ist, aber dass dennoch eine sichere Fluiddurchführung gewährleistet wird.

Weiterhin kann bei einer derartigen Ausführungsform vorteilhaft sein, wenn die die Spannaufnahme aufweisende Oberseite des Spannmoduls und die Oberseite des Grundteils wenigstens weitgehend in einer Ebene liegen und wenn eine Dichtung zur Abdichtung des Radialspalts zwischen dem Spannmodul und dem Grundteil vorgesehen ist. Eine solche Dichtung kann dabei eine Kunststoffdichtung sein, die, entsprechend der Verlagerung des Einsatzteils gegenüber dem Grundteil, ebenfalls in die radiale Richtung verlagerbar ist.

Die eingangs genannte Aufgabe wird auch gelöst durch ein Spannsystem, insbesondere ein Nullpunktspannsystem, mit zwei oder mehreren Spanneinheiten, die jeweils eine Spannaufnahme und wenigstens ein verlagerbares Spannmittel aufweisen. Die Spannmittel sind dabei derart verlagerbar, dass an einem Werkstück oder einem Werkstückträger anordenbare Spannelemente in oder gegen die Spannaufnahmen gezogen werden und dort mittels den Spannmitteln verriegelbar sind. Erfindungsgemäß zeichnen sich diese Spannsysteme dadurch aus, dass eine Spanneinheit als starre Spanneinheit ausgebildet ist, die keinen Ausgleich in eine radiale Richtung zulässt und dass wenigstens eine Spanneinheit als oben beschriebene, erfindungsgemäße Spanneinheit ausgebildet ist. Bei der erfindungsgemäßen Spanneinheit kann es sich, wie oben beschrieben, um eine ausgleichende Spanneinheit handeln, die einen Ausgleich in lediglich eine radiale Richtung zulässt oder um eine schwimmende Spanneinheit, die einen Ausgleich in sämtliche radialen Richtungen zulässt. Dadurch, dass die wenigstens eine weitere Spanneinheit als ausgleichende oder als schwimmende Spanneinheit ausgebildet ist, kann erreicht werden, dass insbesondere auf Grund thermischer Ausdehnungen des Werkstücks oder des Spannsystems dennoch ein wiederholbares und positionsgenaues Spannen möglich ist.

Vorteilhaft ist, wenn die Spanneinheit als ausgleichende Spanneinheit ausgebildet ist, die einen Ausgleich in lediglich eine radiale Richtung zulässt. Dies hat den Vorteil, dass das zu spannende Werkstück oder der zu spannende Werkstückträger zwischen den beiden Spannpunkten lediglich im Hinblick auf den Abstand der beiden Spanneinheiten variieren kann. Dadurch kann ein Variieren des Stichmaß zwischen den beiden Spannaufnahmen der Spanneinheiten in Richtung zwischen den Spannelementen ausgeglichen werden.

Allerdings ist ferner vorteilhaft, wenn eine Spanneinheit als schwimmende Spanneinheit ausgebildet ist, die einen Ausgleich in sämtliche radiale Richtungen ermöglicht. Diese schwimmende Spanneinheit ist vorzugsweise als dritte oder weitere Spanneinheit des Spannsystems vorgesehen. Je nach Geometrie des Werkstücks oder des zu spannenden Trägers kann folglich über die dritte, schwimmende Spanneinheit ein sicheres Spannen erfolgen, wobei diese schwimmende Spanneinheit in Richtung der anderen beiden Spanneinheiten sich ändernde Stichmaße ausgleichen kann.

Als besonders vorteilhaft hat sich ein Spannsystem herausgestellt, das an einem Spanntisch eine starre Spanneinheit, eine ausgleichende Spanneinheit und wenigstens eine weitere schwimmende Spanneinheit vorsieht. Die ausgleichende Spanneinheit gleicht folglich das Stichmaß zwischen der starren Spanneinheit und der ausgleichenden Spanneinheit aus. Die weitere, schwimmende Spanneinheit kann die Stichmaße zwischen der starren Spanneinheit zur schwimmenden Spanneinheit sowie von der ausgleichenden Spanneinheit zur schwimmenden Spanneinheit ausgleichen. Vorteilhafterweise ist die Anordnung derart, dass die starre Spanneinheit und die ausgleichende Spanneinheit als diejenigen Spanneinheiten gewählt werden, die den größten Abstand zueinander vorsehen. Die anderen Spanneinheiten, die einen geringeren Abstand zur starren Spanneinheit aufweisen, sind dann vorzugsweise als schwimmende Spanneinheiten ausgebildet. Dadurch kann insgesamt ein sicheres Spannen des Werkstücks beziehungsweise des Werkstückträgers mit mehreren Spanneinheiten realisiert werden.

Je nach Anforderungsform ist auch denkbar, dass eine oder mehrere Spanneinheiten einen axialen Höhenausgleich vorsehen, um ungewünschte Eigenspannungen im System auf Grund sich ergebender unterschiedlicher Höhen zu vermeiden.

Weitere Ausgestaltungen und Einzelheiten der Erfindung sind den Figuren und der nachfolgenden Beschreibung zu entnehmen, anhand derer zwei Ausführungsbeispiele der Erfindung näher beschrieben und erläutert sind. Es zeigen:
- Figur 1: eine perspektivische Ansicht einer ersten Spanneinheit;
- Figur 2: die Spanneinheit gemäß Figur 1 mit Grundteil und Einsatzteil in Explosionsdarstellung;
- Figur 3: die Draufsicht auf die Spanneinheit gemäß Figur 1, wobei das Einsatzteil eine neutrale Mittellage einnimmt;
- Figur 4: einen Schnitt durch die Spanneinheit gemäß Figur 3 entlang der Linie IV;
- Figur 5: einen Schnitt durch die Spanneinheit gemäß Figur 3 entlang der Linie V;
- Figur 6: einen Schnitt durch die Spanneinheit gemäß Figur 3 entlang der Linie VI;
- Figur 7: eine der Figur 5 entsprechende, vergrößerte Ansicht mit radial verlagertem Einsatzteil;
- Figur 8: eine der Figur 6 vergrößerte Ansicht mit radial verlagertem Einsatzteil;
- Figur 9: eine zweite Ausführungsform einer Spanneinheit in perspektivischer Ansicht;
- Figur 10: einen Längsschnitt durch die Spanneinheit gemäß Figur 9;
- Figur 11: ein erfindungsgemäßes Spannsystem mit einem daran gespannten Bauteil; und
- Figur 12: das Spannsystem gemäß Figur 11 in Draufsicht ohne Bauteil.

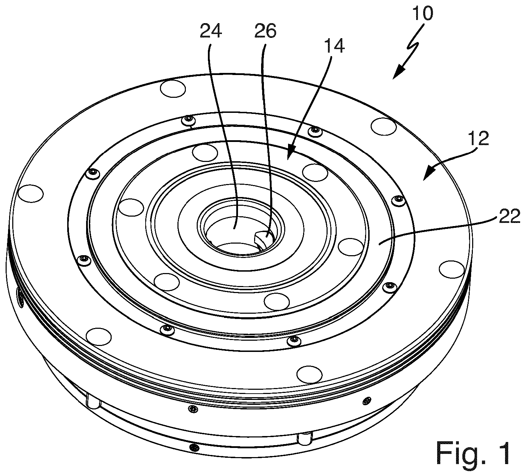

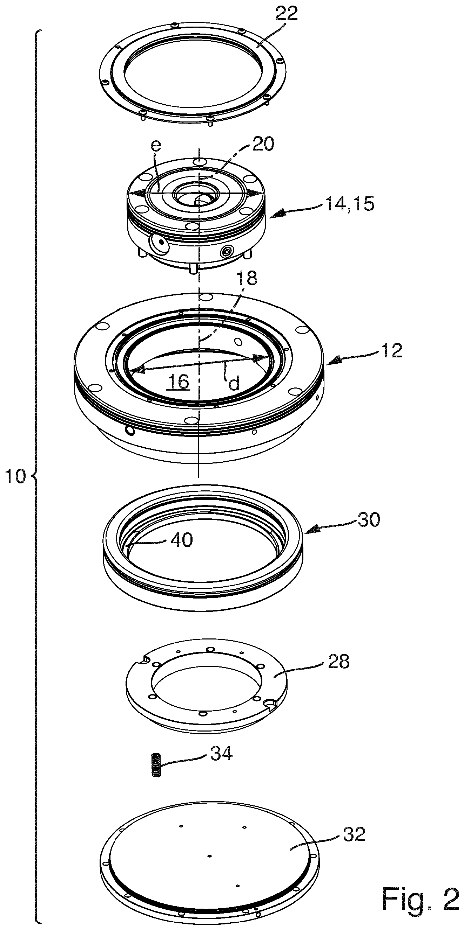

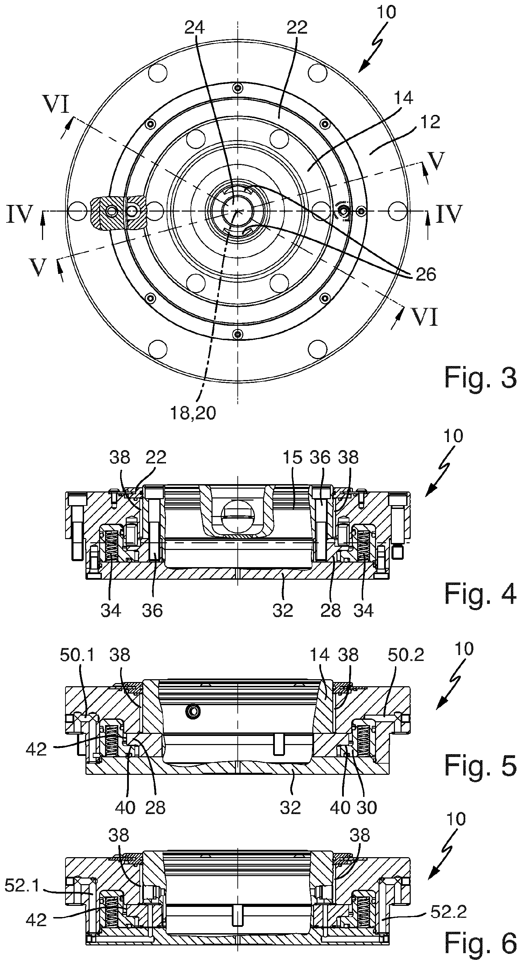

Die Figuren 1, 2 und 3 zeigen eine erfindungsgemäße Spanneinheit 10, die ein Grundteil 12 und ein in das Grundteil 12 eingesetztes Einsatzteil 14 umfasst. Wie aus Figur 2 deutlich wird, ist das Grundteil 12 ringartig ausgebildet und umgibt einen Aufnahmeraum 16, in den das Einsatzteil 14 eingesetzt wird. Der Aufnahmeraum 16 ist in Draufsicht rund ausgebildet und weist eine Mittelachse 18 und einen Durchmesser d auf. Das Einsatzteil 14 ist ebenfalls in Draufsicht rund ausgebildet und weist eine Mittelachse 20 und einen Durchmesser e auf. Der Durchmesser e ist dabei geringer als der Durchmesser d, so dass das Einsatzteil gegenüber dem Grundteil 12 in eine radiale Richtung beweglich angeordnet ist. Dadurch, dass der Durchmesser e geringer als der Durchmesser d ist, entsteht im montierten Zustand ein Radialspalt 38, der in Figur 4 erkennbar ist, von wenigen 1/10 mm bis wenigen Millimetern. Der Spalt wird im montierten Zustand von einem in Figur 1 und 2 gezeigten Dichtringscheibe 22 abgedeckt, wobei sich die Oberseiten des Spannmoduls 15 und des Grundteils 12 weitgehend in einer Ebene befinden.

Die Einsatzeinheit 14 wird dabei von einem Spannmodul 15 und einem ringartig ausgebildeten Klemmabschnitt 28 gebildet und weist eine Spannaufnahme 24 auf. In die Spannaufnahme 24 ist ein Spannelement, das insbesondere an einem Werkstück, Bauteil oder Werkstückträger angeordnet sein kann, einführbar und dort verriegelbar. Zur Verriegelung finden in radialer Richtung verlagerbare Spannmittel 26, insbesondere Spannschieber Verwendung.

Wie ferner aus Figur 2 deutlich wird, ist ein ringartig ausgebildetes Verriegelungsmittel 30 vorgesehen, mit welchem das Einsatzteil 14 nach Erreichen einer Endlage innerhalb des Grundteils 12 am Grundteil 12 verriegelt werden kann. Die Spanneinheit 10 sieht ferner eine Bodenplatte 32 vor, mit welcher die Unterseite des Grundteils 12 verschlossen werden kann. Zwischen der Bodenplatte 32 und dem Verriegelungsmittel 30 sind dabei, wie auch in den Figuren 4, 5 und 6 gezeigt, Federelemente 34 vorgesehen, mit welchen das Verriegelungsmittel 30 gegen das Einsatzteil 14, beziehungsweise dessen Klemmabschnitt 28, gedrängt wird.

Wie aus dem Schnitt gemäß Figur 4 deutlich wird, ist das Spannmodul mittels Schrauben 36 mit dem ringartig ausgebildeten Klemmabschnitt 28 verschraubt.

In den Figuren 4, 5 und 6 ist ebenfalls der Radialspalt 38 zwischen dem Einsatzteil 14 und dem Grundteil 12 deutlich zu erkennen. Da in der Figur 4, 5 und 6 das Einsatzteil 14 zentrisch im Grundteil 12 angeordnet ist, ist der Radialspalt 38 in sämtliche radiale Richtungen gleich.

Wie insbesondere aus dem Schnitt gemäß Figur 5 deutlich wird, weist das Verriegelungsmittel 30 einen nach radial innen ragenden Ringbund auf, der einen Anlageabschnitt 40 bildet. Dieser Anlageabschnitt 40 dient zur Anlage an das Einsatzteil 14, beziehungsweise dessen Klemmabschnitt 28. Der Klemmabschnitt 28 ragt, wie aus den Schnitten gemäß Figur 5 und 6 deutlich wird, in eine sich in axialer Richtung erstreckende Ausnehmung 42, die in axialer Richtung einerseits vom Anlageabschnitt 40 und andererseits vom Grundteil 12 begrenzt wird. Durch die Federvorspannung der Federelemente 34 wird folglich der Klemmabschnitt 28 zwischen dem Anlageabschnitt 40 des Verriegelungsmittels 30 und dem Grundteil 12 verklemmt und damit verriegelt.

Im Schnitt gemäß Figur 5 sind Druckluftleitungen 50 deutlich zu erkennen, die bei Druckbeaufschlagung das Verriegelungsmittel 30 aus der Verriegelungslage in die Entriegelungslage, entgegen der Federkraft der Federn 34, verlagern.

Im Schnitt gemäß Figur 6 sind Leitungen 52 erkennbar, mit welchen die Spannmittel 26 des Spannmoduls 15 betätigt werden können.

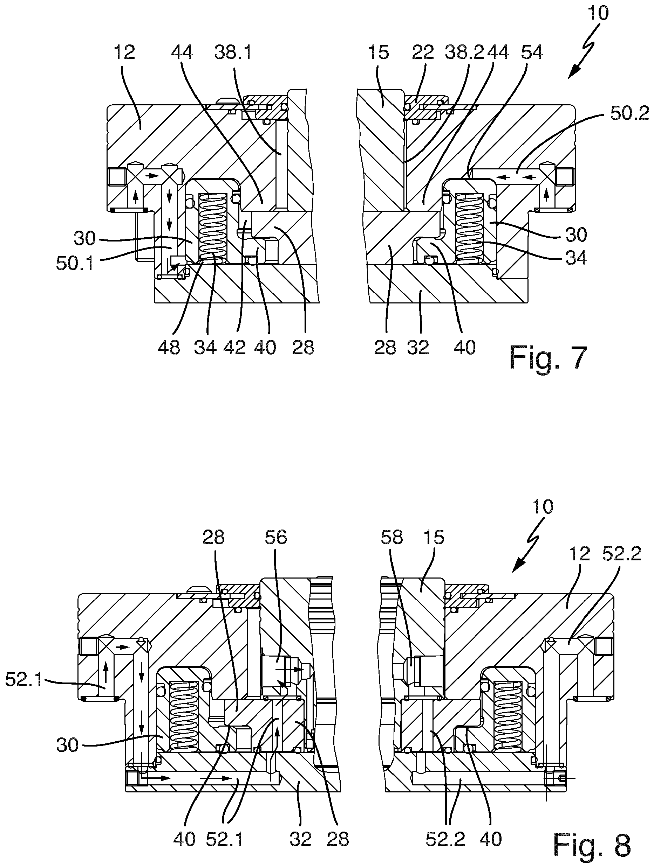

Zur Erläuterung der Funktion der Spanneinheit 10 werden im Weiteren die Figuren 7 und 8 herangezogen. Im Unterschied zu den Schnitten gemäß Figur 4 und 5 ist das Einsatzteil 14 beziehungsweise das Spannmodul 15 nicht konzentrisch im Grundteil 12 beziehungsweise in dessen Aufnahmeraum 16 angeordnet, sondern exzentrisch. Dies wird daraus deutlich, dass in den Figuren 7 und 8 der Radialspalt 38.1 deutlich größer ist als der Radialspalt 38.2.

In der Figur 7 erfolgt eine Verriegelung des Einsatzteils 14, beziehungsweise dessen Klemmabschnitt 28 dadurch, dass das Verriegelungsmittel 30 von den Federelementen 34 nach axial oben und damit dessen Anlageabschnitt 40 gegen den Klemmabschnitt 28 des Einsatzteils 14 beaufschlagt wird. Der Klemmabschnitt 28 wird seinerseits gegen eine Schulter 44 des Grundteils 12 beaufschlagt. Die Schulter 44 bildet dabei zusammen mit dem Klemmabschnitt 28 die Ausnehmung 42, in die der Klemmabschnitt 28 eingreift.

Zur Unterstützung der durch die Federelemente 34 aufgebrachten Klemmkraft ist es möglich, über die Druckleitung 50.1 einen zwischen der Bodenplatte 32 und dem Verriegelungsmittel 30 liegenden Druckraum 48 mit einem insbesondere pneumatischen Druck zu beaufschlagen. Dadurch wird die Klemmkraft zum Verriegeln des Einsatzteils 14 im Grundteil 12 erhöht.

Zum Verlagern des Verriegelungsmittels 30 in die Entriegelungslage ist vorgesehen, zum einen die Leitung 50.1 drucklos zu schalten und zum andern die Leitung 50.2 mit einem Fluiddruck zu beaufschlagen. Die Leitung 50.2 mündet dabei in einen Druckraum 54, der zwischen dem Verriegelungsmittel 30 und dem Grundteil 12 liegt. Bei Druckbeaufschlagung des Druckraums 54 wird folglich das Verriegelungsmittel 30 entgegen der Vorspannkraft der Federelemente 34 in die Entriegelungslage bewegt. In dieser Entriegelungslage ist ein radiales Verstellen des Einsatzteils 14 gegenüber dem Grundteil 12 möglich. Bei Drucklosschaltung der Leitung 50.2 beziehungsweise des Druckraums 54 wird dann auf Grund der Federkraft der Federelemente 34 das Einsatzteil 14 wieder am Grundteil 12 verriegelt.

Aus Figur 8 wird deutlich, dass die Leitungen 52.1 und 52.2 durch das Grundteil 12 und dessen Bodenplatte 32 sowie durch den Klemmabschnitt 28 in das Spannmodul 15 verlaufen. Die Leitung 52.1 mündet dabei im Spannmodul 15 an einem Verriegelungsanschluss 56. Bei Druckbeaufschlagung des Verriegelungsanschlusses 56 werden Spannmittel 26 in die Spannlage betätigt. Die Leitung 52.2 führt durch das Grundteil 12 und dessen Bodenplatte 32 sowie durch den Klemmabschnitt 28 hin zu einem Entriegelungsanschluss 58 des Spannmoduls 15. Bei Druckbeaufschlagung der Leitung 52.2 und damit des Entriegelungsanschlusses 58 werden die Spannmittel 26 aus der Spannlage in die Freigabelage verlagert.

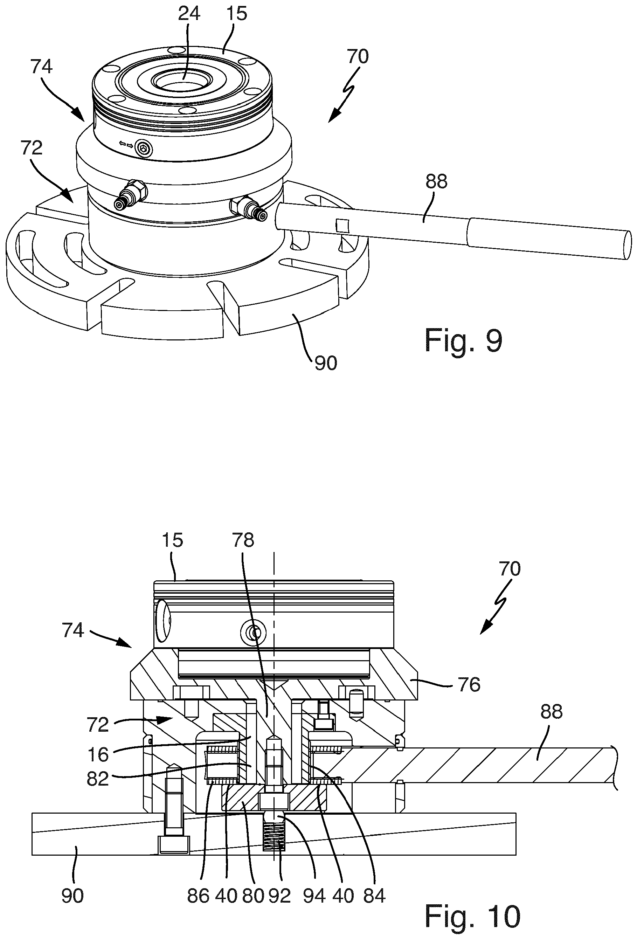

Im Betrieb der in Figuren 1 bis 8 dargestellten Spanneinheit kann folglich das Einsatzteil 14 gegenüber dem Grundteil 12 beim Verlagern des Spannmittels 26 in die Spannlage seine radiale Lage im Grundteil ändern, und damit einen Radialausgleich bewirken. Über das Verriegelungsmittel 30 kann dann das Einsatzteil 14 im Grundteil 12 festgesetzt werden.
Die in den Figuren 9 und 10 gezeigte Spanneinheit 70 umfasst ein Grundteil 72 und ein in das Grundteil 72 einsetzbares Einsatzteil 74. Wie aus der Figur 9 und 10 deutlich wird, umfasst das Grundteil 72 auch eine Fixierplatte 90, die an einem Bearbeitungstisch oder einem Modulträger fixiert werden kann. In der Figur 10 ist das Einsatzteil 74 in einer neutralen Mittellage im Grundteil 72 gezeigt. Das Einsatzteil 74 wird dabei von einem Spannmodul 15, das entsprechend dem Spannmodul 15 der Spanneinheit 10 ausgebildet ist und von einem Trägerteil 76 gebildet. Das Spannmodul 15 ist, wie aus Figur 10 deutlich wird, am Trägerteil 76 befestigt, welches einen in Figur 10 nach unten abstehenden Dorn 78 vorsieht. Der Dorn 78 greift dabei in einen grundteilseitigen Aufnahmeraum 16 ein. Auf der dem Spannmodul 15 abgewandten Seite des Dorns 78 sieht das Einsatzteil eine Spannplatte 80 vor. Das Trägerteil 76 und die Spannplatte 80 begrenzen dabei eine sich in axialer Richtung erstreckende Ausnehmung 82.

Am Grundteil 72 ist ein die Ausnehmung 82 umgebender Gewindeabschnitt 84 vorgesehen, auf dem eine axial verstellbare Mutter 86 angeordnet ist. Die Mutter 86 ist dabei über einen Verstellhebel 88 auf dem Gewindeabschnitt 84 durch Verdrehen in axialer Richtung verstellbar.

Die Mutter 86 bildet dabei das Verriegelungsmittel, mit dem das Einsatzteil am Grundteil 72 verriegelt werden kann.

In der Entriegelungslage ist die Mutter 86 derart verstellt, dass sie nicht gegen die ihr zugewandte Seite der Spannplatte 80 wirkt. In dieser Lage ist dann das Einsatzteil 74, also das Trägerteil 76 samt Spannmodul 15, gegenüber dem Grundteil 72 in radialer Richtung verstellbar. Bei Erreichen einer Endlage kann dann über den Hebel 88 die Mutter 86 nach axial unten verstellt werden, so dass sie gegen die Spannplatte 80 wirkt und damit das Trägerteil 76 gegen das Grundteil 72 gespannt, und damit verriegelt wird.

Um zu erreichen, dass das Einsatzteil 74 in einer Nichtspannlage eine zum Grundteil 72 konzentrische Lage einnimmt, sind zwischen dem Einsatzteil 74 und dem Grundteil 72 elastisch nachgiebige Ausgleichsmittel in Form einer Feder 92 und einer von der Feder 92 beaufschlagten Kugel 94 vorgesehen, die das Einsatzteil 74 in die konzentrische, neutrale Mittellage drängen.

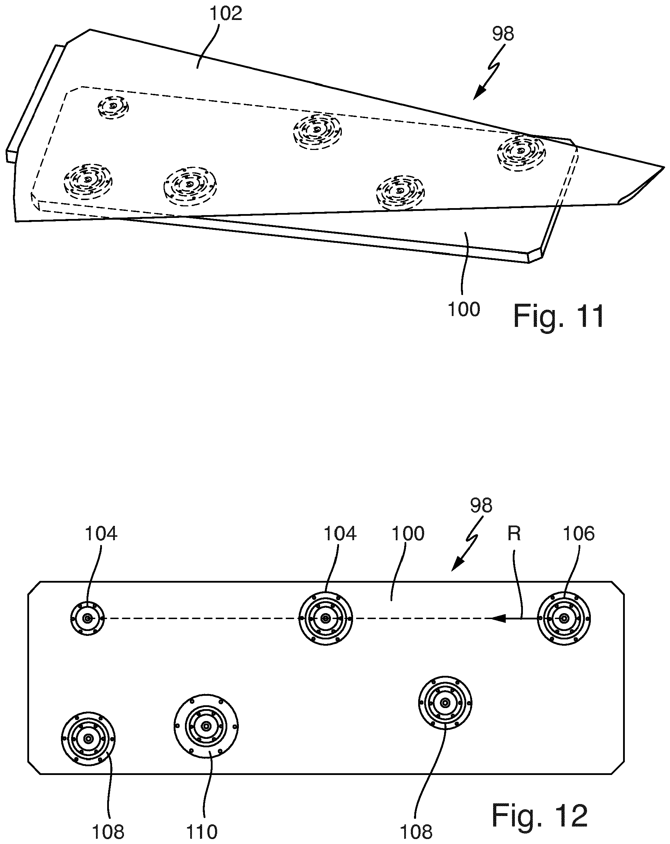

In den Figuren 11 und 12 ist ein Spannsystem 98 gezeigt, das einen Spanntisch 100 mit mehreren Spannmodulen beziehungsweise Spanneinheiten aufweist. Mit dem Spanntisch 100 wird ein Bauteil 102 gespannt, wobei am Bauteil 102 Spannelemente vorgesehen sind, die in die Spannaufnahmen der jeweiligen Spanneinheiten einführbar sind.

Wie aus Figur 12 deutlich wird, ist am Spanntisch 100 eine erste Spanneinheit 104 vorgesehen, welche als starre Spanneinheit ausgebildet ist und keinen Radialausgleich zulässt. Ferner ist eine zweite Spanneinheit 106 vorgesehen, die zur Spanneinheit 104 den größten Abstand aufweist. Bei dieser Spanneinheit 106 handelt es sich um eine Spanneinheit, die ein Grundteil und ein Einsatzteil aufweist, wobei das Einsatzteil einen Radialausgleich hin zum Grundteil in lediglich einer Richtung R zulässt. Diese eine Richtung R ist die Richtung hin zur starren Spanneinheit 104.

Ferner sind drei Spanneinheiten 108 vorgesehen, die als schwimmende Spanneinheiten ausgebildet sind. Bei diesen Spanneinheiten 108 ist jeweils ein Einsatzteil vorgesehen, das gegenüber einem jeweiligen Grundteil einen Radialausgleich in sämtliche Richtungen ermöglicht.

Ferner ist eine Spanneinheit 110 vorgesehen, die ebenfalls als schwimmende Spanneinheit ausgebildet ist und einen Radialausgleich des Einsatzteils gegenüber dem Grundteil in sämtliche Richtungen ermöglicht. Diese Spanneinheit 110 ist zudem verriegelbar ausgebildet, das heißt das Einsatzteil ist gegenüber dem Grundteil in einer Endlage verriegelbar. Bei der Spanneinheit 110 handelt es sich insbesondere um eine in den Figuren 1 bis 8 dargestellte Spanneinheit.

Insgesamt kann hierdurch ein positionsgenaues, wiederholbares Spannen bereitgestellt werden, auch dann noch, wenn das zu spannende Bauteil 102 oder der Spanntisch 100 beispielsweise auf Grund von Temperaturausdehnungen seine Abmessungen geringfügig ändert.

## Patentansprüche

1. Spanneinheit (10, 70) mit einem Spannmodul (15), insbesondere Spanneinheit eines Nullpunktspannsystems (98), wobei das Spannmodul (15) eine Spannaufnahme (24) und wenigstens ein verlagerbares Spannmittel (26) derart aufweist, dass ein Spannelement gegen oder in die Spannaufnahme gezogen wird und dort mittels des Spannmittels (26) verriegelbar ist, wobei ein Grundteil (12, 72) vorgesehen ist und wobei das Spannmodul (15) in oder an einem Einsatzteil (14, 74) angeordnet ist oder als solches ausgebildet ist, wobei Verriegelungsmittel (30, 86) vorgesehen sind, die aus einer Entriegelungslage, in der das Einsatzteil (14, 74) bewegt werden kann, in eine Verriegelungslage, in der das Einsatzteil (14, 74) gegen das Grundteil verriegelt ist, verlagerbar sind, **dadurch gekennzeichnet, dass** das Grundteil (12, 72) ringartig ausgebildet ist und einen Aufnahmeraum (16) aufweist und dass das Einsatzteil (14, 74) in dem Aufnahmeraum (16) im montierten Zustand so angeordnet ist, dass zwischen dem Einsatzteil (14, 74) und dem Grundteil (12, 72) ein Radialspalt (38) vorgesehen ist, wodurch das Einsatzteil (14, 74) gegenüber dem Grundteil (12, 72) derart in wenigstens eine radiale Richtung beweglich angeordnet ist, dass beim Verlagern des Spannmittels (26) in die Spannlage ein Radialausgleich des Einsatzteils (14, 74) gegenüber dem Grundteil (12, 72) in eine Endlage ermöglicht ist.

2. Spanneinheit (10, 70) nach Anspruch 1, **dadurch gekennzeichnet, dass** das Grundteil (12, 72) und das Einsatzteil (14, 74) derart ausgebildet sind, dass das Einsatzteil (14, 74) lediglich in einer radialen Richtung beweglich angeordnet ist.

3. Spanneinheit (10, 70) nach Anspruch 2, **dadurch gekennzeichnet, dass** das Grundteil (12, 72) beziehungsweise das Einsatzteil (14, 74) in Richtung der einen radialen Richtung verlaufende Flächenabschnitte aufweist, und dass das Einsatzteil (14, 74) beziehungsweise das Grundteil mit diesen Flächenabschnitten korrespondierende Gegenabschnitte aufweist, so dass das Einsatzteil (14, 74) lediglich in der einen radialen Richtung gegenüber dem Grundteil (12, 72) beweglich angeordnet ist.

4. Spanneinheit (10, 70) nach Anspruch 1, **dadurch gekennzeichnet, dass** das Grundteil (12, 72) und das Einsatzteil (14, 74) derart ausgebildet sind, dass das Einsatzteil (14, 74) in sämtlichen radialen Richtungen gegenüber dem Grundteil (12, 72) beweglich angeordnet ist.

5. Spanneinheit (10, 70) nach einem der vorhergehenden Ansprüche, **dadurch gekennzeichnet, dass** die Verriegelungsmittel (30, 86) Anlageabschnitte (40) aufweisen, die in der Verriegelungslage das Einsatzteil (14, 74) in axialer Richtung gegen das Grundteil (12, 72) beaufschlagen.

6. Spanneinheit (10, 70) nach Anspruch 5, **dadurch gekennzeichnet, dass** die Verriegelungsmittel (30) und das Grundteil (12) eine sich in axialer Richtung erstreckende Ausnehmung (42) begrenzen, und dass das Einsatzteil (14) einen in die Ausnehmung (42, 82) eingreifenden Klemmabschnitt (28) derart aufweist, dass in der Verriegelungslage die Anlageabschnitte (40) den Klemmabschnitt (28) gegen das Grundteil beaufschlagen.

7. Spanneinheit (10) nach einem der vorhergehenden Ansprüche, **dadurch gekennzeichnet, dass** Federelemente (34) vorgesehen sind, die die Verriegelungsmittel (30) in der Verriegelungslage gegen das Einsatzteil (14) drängen.

8. Spanneinheit (10) nach einem der vorhergehenden Ansprüche, **dadurch gekennzeichnet, dass** die Verriegelungsmittel (30) wenigstens einen Druckraum (48) begrenzen, der bei Druckbeaufschlagung die Verriegelungsmittel (30) gegen das Einsatzteil (12) beaufschlagen.

9. Spanneinheit (10, 70) nach einem der vorhergehenden Ansprüche, **dadurch gekennzeichnet, dass** die Verriegelungsmittel (30) einen das Einsatzteil (12, 72) in radialer Richtung umgebenden Verriegelungsring umfassen.

10. Spanneinheit (70) nach einem der Ansprüche 1 bis 5, **dadurch gekennzeichnet, dass** die Verriegelungsmittel (86) wenigstens eine verlagerbare Schraube und/oder Mutter umfassen, die in der Verriegelungslage das Einsatzteil (74) gegen das Grundteil (72) beaufschlägt.

11. Spanneinheit (70) nach Anspruch 10, **dadurch gekennzeichnet, dass** das Einsatzteil (74) eine sich in axialer Richtung erstreckende Ausnehmung (82) begrenzt, und dass die Verriegelungsmittel (86) in die Ausnehmung (82) eingreifen, so dass in der Verriegelungslage die Verriegelungsmittel (86) das Einsatzteil (74) gegen das Grundteil beaufschlagen.

12. Spanneinheit (10) nach einem der vorhergehenden Ansprüche, **dadurch gekennzeichnet, dass** das Grundteil (12) Spannanschlüsse und sich daran anschließende Spannkanäle (52) zur Versorgung des wenigstens einen Spannmittels (26) und/oder Verriegelungsanschlüsse und sich daran anschließende Verriegelungskanäle (50) zur Versorgung der Verriegelungsmittel (30) aufweist.

13. Spanneinheit (10) nach einem der vorhergehenden Ansprüche, **dadurch gekennzeichnet, dass** die die Spannaufnahme (24) aufweisende Oberseite des Spannmoduls (15) und die Oberseite des Grundteils (12) wenigstens weitgehend in einer Ebene liegen und dass eine Dichtung (22) zur Abdichtung des Radialspalts (38) zwischen dem Spannmodul (15) und dem Grundteil (12) vorgesehen ist.

14. Spannsystem (18), insbesondere Nullpunktspannsystem, mit zwei oder mehreren Spanneinheiten (104, 106, 108, 110), die jeweils eine Spannaufnahme (24) und wenigstens ein verlagerbares Spannmittel (26) derart aufweisen, dass an einem Werkstück (102) oder einem Werkstückträger anordenbare Spannelemente gegen oder in die Spannaufnahmen (104, 106, 108, 110) gezogen werden und dort mittels dem jeweiligen Spannmittel (26) verriegelbar sind, **dadurch gekennzeichnet, dass** eine Spanneinheit (104) als starre Spanneinheit ausgebildet ist, die keinen Ausgleich in eine radiale Richtung zulässt, und dass wenigstens eine Spanneinheit (110) als Spanneinheit nach einem der vorhergehenden Ansprüche ausgebildet ist.

15. Spannsystem nach Anspruch 14, **dadurch gekennzeichnet,**
- **dass** eine Spanneinheit (104) als starre Spanneinheit ausgebildet ist, die keinen Ausgleich in eine radiale Richtung zulässt,
- **dass** wenigstens eine Spanneinheit (106) als ausgleichende Spanneinheit nach Anspruch 2 oder 3 ausgebildet ist, die einen Ausgleich lediglich in die zur starren Spanneinheit (104) verlaufende radiale Richtung (R) zulässt, und
- **dass** wenigstens eine weitere Spanneinheit als schwimmende Spanneinheit (110) nach Anspruch 4 ausgebildet ist, das einen Ausgleich in sämtliche radiale Richtungen zulässt.

## Claims

1. Clamping unit (10, 70) with a clamping module (15), in particular clamping unit of a zero point clamping system (98), wherein the clamping module (15) comprises a clamping seat (24) and at least one displaceable clamping means (26) in such a way that a clamping element is pulled against or into the clamping seat and can be locked there by means of the clamping means (26), wherein a base part (12, 72) is provided and wherein the clamping module (15) is arranged in or on an insert part (14, 74) or is formed as such a part, wherein locking means (30, 86) are provided which can be displaced from an unlocked position, in which the insert part (14, 74) can be moved, into a locked position, in which the insert part (14, 74) is locked against the base part, **characterized in that** the base part (12, 72) is formed ring-like and has an seat space (16) and that the insert part (14, 74) is arranged in the seat space in the assembled state in such a way that between the insert part (14, 74) and the base part (12, 72) a radial gap (38) is provided, whereby the insert part (14, 74) is arranged movably relative to the base part (12, 72) in at least one radial direction in such a way that during displacement of the clamping means (26) into the clamping position a radial compensation of the insert part (14, 74) with respect to the base part (12, 72) into a final position is possible.

2. Clamping unit (10, 70) as claimed in claim 1, **characterized in that** the base part (12, 72) and the insert part (14, 74) are formed in such a way that the insert part (14, 74) is arranged so as to be movable only in one radial direction.

3. Clamping unit (10, 70) as claimed in claim 2, **characterized in that** the base part (12, 72) or the insert part (14, 74), respectively, comprise surface portions extending in the direction of said one radial direction, and that the insert part (14, 74) or the base part, respectively, comprise corresponding counter portions to these surface portions so that the insert part (14, 74) is arranged so as to be movable only in said one radial direction with respect to the base part (12, 72).

4. Clamping unit (10, 70) as claimed in claim 1, **characterized in that** the base part (12, 72) and the insert part (14, 74) are formed in such a way that the insert part (14, 74) is arranged so as to be movable in all radial directions with respect to the base part (12, 72).

5. Clamping unit (10, 70) as claimed in one of the preceding claims, **characterized in that** the locking means (30, 86) comprise abutment portions (40) which, in the locked position, act upon the insert part (14, 74) in axial direction against the base part (12, 72).

6. Clamping unit (10, 70) as claimed in claim 5, **characterized in that** the locking means (30) and the base part (12) delimit a recess (42) extending in a radial direction, and that the insert part (14) comprises a clamping portion (28) engaging with the recess (42, 82) in such a way that, in the locked position, the abutment portions (40) act upon the clamping portion (28) against the base part.

7. Clamping unit (10) as claimed in one of the preceding claims, **characterized in that** spring elements (34) are provided which push the locking means (30) into the locked position against the insert part (14).

8. Clamping unit (10) as claimed in one of the preceding claims, **characterized in that** the locking means (30) delimit at least one pressure space (48) which upon pressurizing acts upon the clamping means (30) against the insert part (12).

9. Clamping unit (10, 70) as claimed in one of the preceding claims, **characterized in that** the locking means (30) comprise a locking ring surrounding the insert part (12, 72) in radial direction.

10. Clamping unit (70) as claimed in one of claims 1 to 5, **characterized in that** the locking means (86) comprise at least one displaceable screw and/or nut which, in the locked position, acts upon the insert part (74) against the base part (72).

11. Clamping unit (70) as claimed in claim 10, **characterized in that** the insert part (74) delimits a recess (82) extending in radial direction and that the locking means (86) engage in the recess (82) so that, in the locked position, the locking means (86) act upon the insert part (74) against the base part.

12. Clamping unit (10) as claimed in one of the preceding claims, **characterized in that** the base part (12) comprises clamping terminals and clamping channels (52) continuous therewith for supplying the at least one clamping means (26) and/or locking terminals and locking channels (50) continuous therewith for supplying the locking means (30).

13. Clamping unit (10) as claimed in one of the preceding claims, **characterized in that** the top face of the clamping module (15) comprising the clamping seat (24) and the top face of the base part (12) are positioned at least substantially in a plane and that a seal (22) for sealing the radial gap (38) between the clamping module (15) and the base part (12) is provided.

14. Clamping system (18), in particular zero point clamping system, having two or several clamping units (104, 106, 108, 110), each comprising a clamping seat (24) and at least one displaceable clamping means (26) in such a way that clamping elements which can be arranged on a workpiece (102) or workpiece holder are pulled against or into the clamping seat (104, 106, 108, 110) and are locked there by means of the respective clamping means (26), **characterized in that** a clamping unit (104) is formed as a rigid clamping unit which allows no compensation in a radial direction, and that at least one clamping unit (110) is formed as a clamping unit as claimed in one of the preceding claims.

15. Clamping system as claimed in claim 14, **characterized in**
- **that** a clamping unit is formed as a rigid clamping unit which allows no compensation in a radial direction,
- **that** at least one clamping unit (106) is formed as a compensating clamping unit as claimed in claim 2 or 3, which allows a compensation only in the radial direction (R) extending relative to the rigid clamping unit (104), and
- **that** at least one further clamping unit is formed as a floating clamping unit (110) as claimed in claim 4 which allows a compensation in all radial directions.

## Revendications

1. Unité de serrage (10, 70) avec un module de serrage (15), en particulier unité de serrage d'un système de serrage à point zéro (98), dans laquelle le module de serrage (15) présente un logement de serrage (24) et au moins un moyen de serrage (26) déplaçable, de telle sorte qu'un élément de serrage est tiré contre ou dans le logement de serrage et peut y être verrouillé au moyen du moyen de serrage (26), dans laquelle une partie de base (12, 72) est prévue et dans laquelle le module de serrage (15) est disposé dans ou sur une partie d'insertion (14, 74) ou réalisé en tant que telle, dans laquelle des moyens de verrouillage (30, 86) sont prévus, qui sont déplaçables d'une position de déverrouillage, dans laquelle la partie d'insertion (14, 74) peut être mue, dans une position de verrouillage, dans laquelle la partie d'insertion (14, 74) est verrouillée contre la partie de base, **caractérisée en ce que** la partie de base (12, 72) est réalisée de façon annulaire et présente un espace de réception (16) et que la partie d'insertion (14, 74) est disposée dans l'espace de réception (16) dans l'état monté de sorte qu'une fente radiale (38) est prévue entre la partie d'insertion (14, 74) et la partie de base (12, 72), ce qui a pour effet que la partie d'insertion (14, 74) est disposée de manière mobile dans au moins une direction radiale par rapport à la partie de base (12, 72), de telle sorte que, lors du déplacement du moyen de serrage (26) dans la position de serrage, une compensation radiale de la partie d'insertion (14, 74) par rapport à la partie de base (12, 72) dans une position finale est permise.

2. Unité de serrage (10, 70) selon la revendication 1, **caractérisée en ce que** la partie de base (12, 72) et la partie d'insertion (14, 74) sont réalisées de telle sorte que la partie d'insertion (14, 74) est disposée de manière mobile uniquement dans une direction radiale.

3. Unité de serrage (10, 70) selon la revendication 2, **caractérisée en ce que** la partie de base (12, 72) ou la partie d'insertion (14, 74) présente des sections de surface s'étendant en direction d'une des directions radiales, et que la partie d'insertion (14, 74) ou la partie de base présente des sections complémentaires correspondant à ces sections de surface, de sorte que la partie d'insertion (14, 74) est disposée de manière mobile par rapport à la partie de base (12, 72) uniquement dans une des directions radiales.

4. Unité de serrage (10, 70) selon la revendication 1, **caractérisée en ce que** la partie de base (12, 72) et la partie d'insertion (14, 74) sont réalisées de telle sorte que la partie d'insertion (14, 74) est disposée de manière mobile par rapport à la partie de base (12, 72) dans toutes les directions radiales.

5. Unité de serrage (10, 70) selon l'une quelconque des revendications précédentes, **caractérisée en ce que** les moyens de verrouillage (30, 86) présentent des sections d'appui (40), qui, dans la position de verrouillage, sollicitent la partie d'insertion (14, 74) dans la direction axiale contre la partie de base (12, 72).

6. Unité de serrage (10, 70) selon la revendication 5, **caractérisée en ce que** les moyens de verrouillage (30) et la partie de base (12) délimitent un évidement (42) s'étendant dans la direction axiale, et que la partie d'insertion (14) présente une section de blocage (28) s'insérant dans l'évidement (42, 82), de telle sorte que, dans la position de verrouillage, les sections d'appui (40) sollicitent la section de blocage (28) contre la partie de base.

7. Unité de serrage (10) selon l'une quelconque des revendications précédentes, **caractérisée en ce que** des éléments ressorts (34) sont prévus, qui poussent les moyens de verrouillage (30) dans la position de verrouillage contre la partie d'insertion (14).

8. Unité de serrage (10) selon l'une quelconque des revendications précédentes, **caractérisée en ce que** les moyens de verrouillage (30) délimitent au moins une chambre de pression (48), qui, lors d'une sollicitation en pression, sollicitent les moyens de verrouillage (30) contre la partie d'insertion (12).

9. Unité de serrage (10, 70) selon l'une quelconque des revendications précédentes, **caractérisée en ce que** les moyens de verrouillage (30) comprennent une bague de verrouillage entourant la partie d'insertion (12, 72) dans la direction radiale.

10. Unité de serrage (70) selon l'une quelconque des revendications 1 à 5, **caractérisée en ce que** les moyens de verrouillage (86) comprennent au moins une vis et/ou un écrou déplaçable, qui, dans la position de verrouillage, sollicite la partie d'insertion (74) contre la partie de base (72).

11. Unité de serrage (70) selon la revendication 10, **caractérisée en ce que** la partie d'insertion (74) délimite un évidement (82) s'étendant dans la direction axiale, et que les moyens de verrouillage (86) s'insèrent dans l'évidement (82), de sorte que, dans la position de verrouillage, les moyens de verrouillage (86) sollicitent la partie d'insertion (74) contre la partie de base.

12. Unité de serrage (10) selon l'une quelconque des revendications précédentes, **caractérisée en ce que** la partie de base (12) présente des raccords de serrage et des canaux de serrage (52) se raccordant à ceux-ci pour l'alimentation de l'au moins un moyen de serrage (26) et/ou des raccords de verrouillage et des canaux de verrouillage (50) se raccordant à ceux-ci pour l'alimentation des moyens de verrouillage (30).

13. Unité de serrage (10) selon l'une quelconque des revendications précédentes, **caractérisée en ce que** la face supérieure du module de serrage (15) présentant le logement de serrage (24) et la face supérieure de la partie de base (12) se situent au moins en grande partie dans un plan et qu'un joint (22) destiné à assurer l'étanchéité de la fente radiale (38) est prévu entre le module de serrage (15) et la partie de base (12).

14. Système de serrage (18), en particulier système de serrage à point zéro, avec deux unités de serrage (104, 106, 108, 110) ou plus, qui présentent respectivement un logement de serrage (24) et au moins un moyen de serrage (26) déplaçable, de telle sorte que des éléments de serrage pouvant être disposés sur une pièce (102) ou un porte-pièce sont tirés contre ou dans les logements de serrage (104, 106, 108, 110) et peuvent y être verrouillés au moyen du moyen de serrage (26) respectif, **caractérisé en ce qu'**une unité de serrage (104) est réalisée sous la forme d'une unité de serrage fixe, qui n'admet aucune compensation dans une direction radiale, et qu'au moins une unité de serrage (110) est réalisée sous la forme d'une unité de serrage selon l'une quelconque des revendications précédentes.

15. Système de serrage selon la revendication 14, **caractérisé en ce**
- **qu'**une unité de serrage (104) est réalisée sous la forme d'une unité de serrage fixe, qui n'admet aucune compensation dans une direction radiale,
- **qu'**au moins une unité de serrage (106) est réalisée sous la forme d'une unité de serrage à compensation selon la revendication 2 ou 3, qui admet une compensation uniquement dans la direction radiale (R) s'étendant par rapport à l'unité de serrage (104) fixe, et
- **qu'**au moins une autre unité de serrage est réalisée sous la forme d'une unité de serrage (110) flottante selon la revendication 4, qui admet une compensation dans toutes les directions radiales.
